# EUROPEAN PATENT SPECIFICATION

(11) **EP 1 019 797 B1**
(45) Date of publication and mention of the grant of the patent: **31.10.2001**
(21) Application number: 98944940.0
(22) Date of filing: 30.09.1998
(51) Int. Cl.: G06F 1/16, G06F 3/02

(54) **POCKET COMPUTER WITH FULL SIZE KEYBOARD**
TASCHENRECHNER MIT VOLLGROSSER TASTATUR
ORDINATEUR DE POCHE A CLAVIER DE DIMENSION NORMALE

(30) Priority: 02.10.1997 US 942778
(43) Date of publication of application: 19.07.2000
(73) Proprietor: Katz, Michael, Vancouver, British Columbia V5Z 3Z1 (CA)
(72) Inventor: Katz, Michael, Vancouver, British Columbia V5Z 3Z1 (CA)
(74) Representative: Eisenführ, Speiser & Partner
(86) International application number: PCT/CA98/00912
(87) International publication number: WO 99/18491

(56) References cited:
- EP-A- 0 605 827
- EP-A- 0 671 751
- DE-A- 19 502 704
- DE-A- 19 546 786
- DE-A- 19 648 802
- GB-A- 2 279 617
- US-A- 5 703 578
- PATENT ABSTRACTS OF JAPAN vol. 095, no. 007, 31 August 1995 & JP 07 093069 A (ATSUKO ITO), 7 April 1995

## Description

### Technical Field

The invention relates to the field of "palm top" or pocket computers and more particularly to a palm top computer having a full-size keyboard and a useful size screen.

### Background Art

For historical reasons, the standard QWERTY keyboard which was developed for mechanical typewriters remains the most common medium for inputting information to a computer. The size and spacing of the keys on such a keyboard was determined by the size of the human hand and fingers. For each key to be strongly struck a travel motion of at least 3/16" was required. The letter or symbol associated with a given key was determined by the frequency of occurrence of the different letters in the English language. Personal computers continue to use electronic equivalents of the mechanical QWERTY keyboard. Personal computers have been progressively miniaturized, so that presently pocket computers, or "palm top" computers (also referred to as "personal digital assistants") are available which are foldable to fit in the user's pocket. An example is the CASIO PEIA™ personal digital assistant. Operating systems are provided for such palm top computers such as WINDOWS/95 CE™ which allow the user to run applications software designed for personal computers. However in order to fit a keyboard into a palm top computer, the existing solution has been to miniaturize the keys of the keyboard. This makes it impossible for the user to type on the keyboard in the usual way. The screens also are very small.

United States patent no. 3,940,758, issued February 24, 1976 to Margolin, discloses an expandable keyboard for a pocket calculator, in which the keyboard pad is formed of three modular sections which are hinged together mechanically, normally forming a stack which spreads into an enlarged keyboard. However the enlarged keyboard in Margolin is still considerably smaller than a standard keyboard (the two expansion sections being 6.5 inches wide, compared to about 11 inches for a standard keyboard), and therefore use of the device for current word processing applications was clearly not contemplated, nor would calculators of that era have had the computing power and software for such uses.

A number of patents disclose hinged extensions to expand the keyboard of a notebook computer. For example, United States patent no. 5,187,644 issued February 16, 1993 and United States patent no. 5,519,569 issued May 21, 1996, both to Compaq Computer Corp. disclose portable computers of the notebook variety having extendable end segments which are hinged to the central keyboard. United States patent no. 5,457,453 issued October 10, 1995 discloses a miniature computer having a folding keyboard, which leaves a jagged edge when folded. Another folding keyboard is known from document Patent Abstracts of Japan Vol 095, no. 007, 31/8/95 & JP 07 093 069 A. However none of these devices provide a full size keyboard for a folding pocket computer.

There is therefore a need for a folding miniaturized computer, to allow the keyboard and screen to fit into a person's pocket, which nonetheless provides a full size keyboard and a useful screen when opened.

### Disclosure of Invention

The invention as set out in claim 1, therefore provides a folding computer comprising a folding keyboard, the keyboard comprising a plurality of keys generally corresponding in spacing and location to the keys of a standard personal computer keyboard, and comprising two halves hingedly connected along a fold line, whereby the computer folds from a fully open position to a folded position wherein the two halves and associated keyboard sections face each other. According to one aspect of the invention, at least one of the keys is split along the fold line to permit folding of said keyboard. The invention also provides a folding keyboard for use in a pocket computer.

### Brief Description of Drawings

In drawings illustrating a preferred embodiment of the invention, in which the vertical scale has been exaggerated for ease of illustration:
Fig. 1 is a perspective view of a computer according to a first embodiment of the invention, having a small screen integral with the keyboard, in open configuration;
Fig. 2 is a perspective view of a computer according to the embodiment shown in Fig. 1 in closed configuration;
Fig. 3 is a left side view of a computer according to the embodiment shown in Fig. 1 in open configuration;
Fig. 4 is a top view of a computer according to the embodiment shown in Fig. 1 in closed configuration;
Fig. 5 is a front view of a computer according to the embodiment shown in Fig. 1 in closed configuration;
Fig. 6 is a rear view of a computer according to the embodiment shown in Fig. 1 in closed configuration;
Fig. 7 is a left side view of a computer according to the embodiment shown in Fig. 1 in closed configuration;
Fig. 8 is a left side view of a computer according to the embodiment shown in Fig. 1 in closed configuration;
Fig. 9 is a top plan view of a computer according to the embodiment shown in Fig. 1 in open configuration;
Fig. 10 is an exploded detail view of the hinge shown in Fig. 1;
Fig. 11 is a perspective view of a computer according to a second embodiment of the invention, having a flip-up screen;
Fig. 12 is a perspective view of a computer according to the embodiment shown in Fig. 11 in open configuration with the screen folded down;
Fig. 13 is a perspective view of a computer according to the embodiment shown in Fig. 11 in closed configuration;
Fig. 14 is a left side view of a computer according to the embodiment shown in Fig. 11 in open configuration;
Fig. 15 is a top view of a computer according to the embodiment shown in Fig. 11 in closed configuration;
Fig. 16 is a front view of a computer according to the embodiment shown in Fig. 11 in closed configuration;
Fig. 17 is a rear view of a computer according to the embodiment shown in Fig. 11 in closed configuration;
Fig. 18 is a left side view of a computer according to the embodiment shown in Fig. 11 in closed configuration;
Fig. 19 is a right side view of a computer according to the embodiment shown in Fig. 11 in closed configuration;

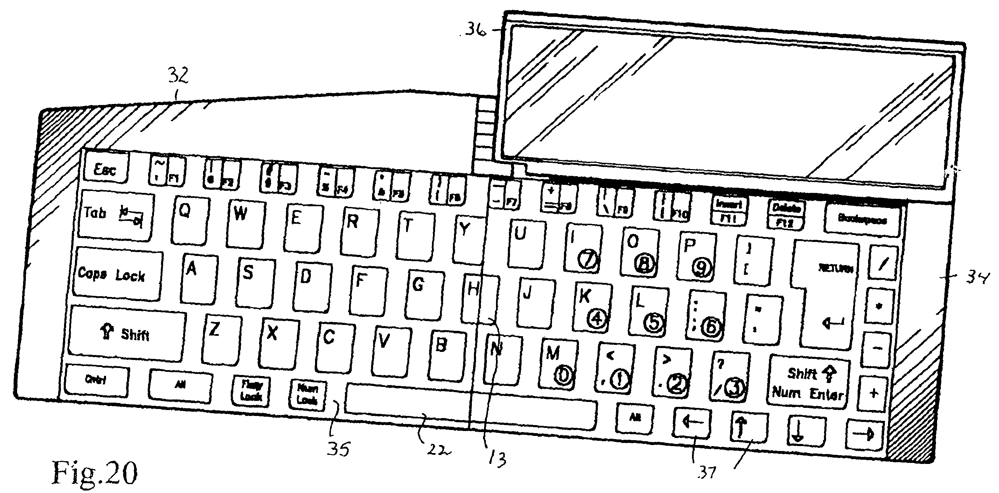

Fig. 20 is a top plan view of a computer according to the embodiment shown in Fig. 9 in open configuration;
Fig. 21 is a perspective view of a computer according to a third embodiment of the invention, having two flip-up screens;
Fig. 22 is a perspective view of a computer according to the embodiment shown in Fig. 21 in open configuration with the screen folded down;
Fig. 23 is a perspective view of a computer according to the embodiment shown in Fig. 21 in closed configuration;

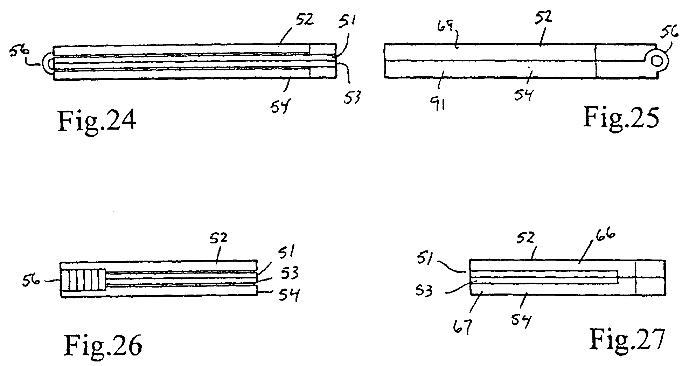

Fig. 24 is a front view of a computer according to the embodiment shown in Fig. 21 in closed configuration;
Fig. 25 is a rear view of a computer according to the embodiment shown in Fig. 21 in closed configuration;
Fig. 26 is a left side view of a computer according to the embodiment shown in Fig. 21 in closed configuration;
Fig. 27 is a right side view of a computer according to the embodiment shown in Fig. 21 in closed configuration;
Fig. 28 is a perspective view of a computer according to a fourth embodiment of the invention in open configuration, having two flip-up screens, each screen folding into two screens making one large screen divided into four equal segments;
Fig. 29 is a perspective view of a computer according to the embodiment shown in Fig. 28 in open configuration with the top two screens folded down;
Fig. 30 is a perspective view of a computer according to the embodiment shown in Fig. 28 in open configuration with all four screens folded down;
Fig. 31 is a perspective view of a computer according to the embodiment shown in Fig. 28 in closed configuration ;
Fig. 32 is a left side view of a computer according to the embodiment shown in Fig. 28 in open configuration;

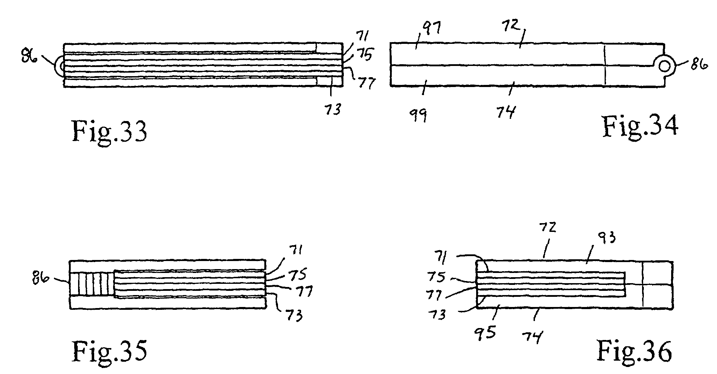

Fig. 33 is a front view of a computer according to the embodiment shown in Fig. 28 in closed configuration;
Fig. 34 is a rear view of a computer according to the embodiment shown in Fig. 28 in closed configuration;
Fig. 35 is a left side view of a computer according to the embodiment shown in Fig. 28 in closed configuration;
Fig. 36 is a right side view of a computer according to the embodiment shown in Fig. 28 in closed configuration;
Fig. 37 is a detail of a cross-section taken along line C-C of Fig. 3.
Fig. 38 is a plan view of a computer according to a fifth embodiment of the invention, having a sliding array of keys, showing the keys in folding configuration;
Fig. 39 is a plan view of the embodiment of the computer shown in Fig. 38 showing the keys in typing configuration;
Fig. 40 is a cross-section taken along line A-A of Fig. 39 showing the keys in typing configuration;
Fig. 41 is a cross-section taken along line A-A of Fig. 38 showing the keys in folding configuration; and
Fig. 42 is a cross-section taken along line B-B of Fig. 38.

### Best Mode(s) For Carrying Out the Invention

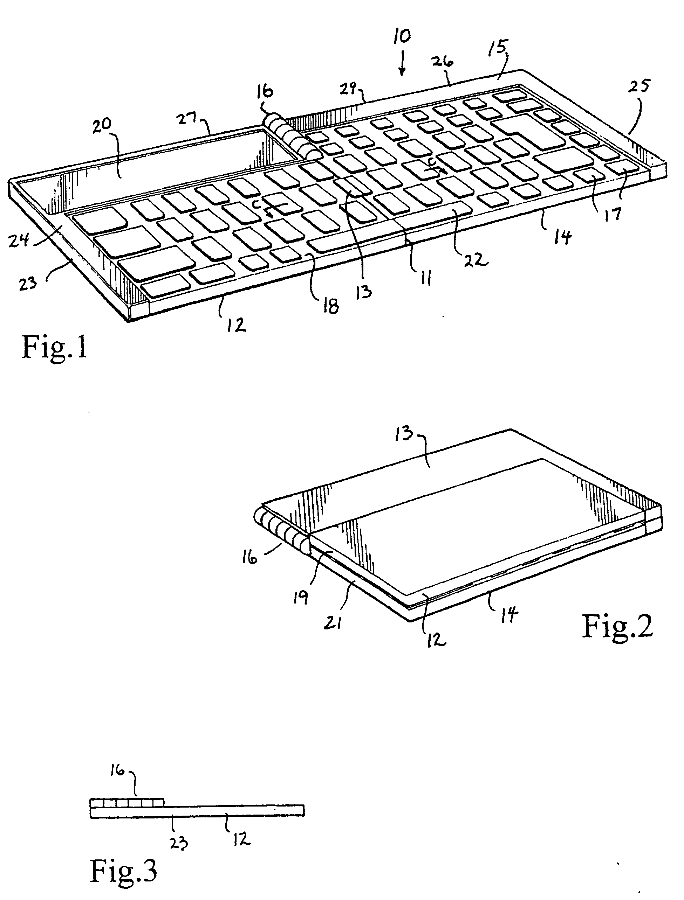

Referring to Fig. 1 through 3 of the drawings, a pocket computer or palm top computer is shown as 10, having a top half 12 and a bottom half 14, hinged at hinge 16 to be foldable from a fully open configuration shown in Fig. 1 to a folded configuration shown in Fig. 2. Computer 10 preferably will be capable of supporting all the applications of a personal computer, such as word processing, spreadsheets, files and folders organization, telephone numbers, addresses, appointment scheduling, access to Internet, etc. Computer 10, for purposes of compactness, need not have a disk drive, power supply or large screen or all the other hardware generally associated with laptop and desktop computers, but still will perform most of the functions of the latter systems, albeit at lesser speeds. Alternatively, the number of functions of the computer can be minimized so as to create a unit which will function exclusively as an Internet Access Device equipped with a screen and full size keyboard. The cost of manufacturing such a device will be a small fraction of the costs of current portable computers having full size keyboards.

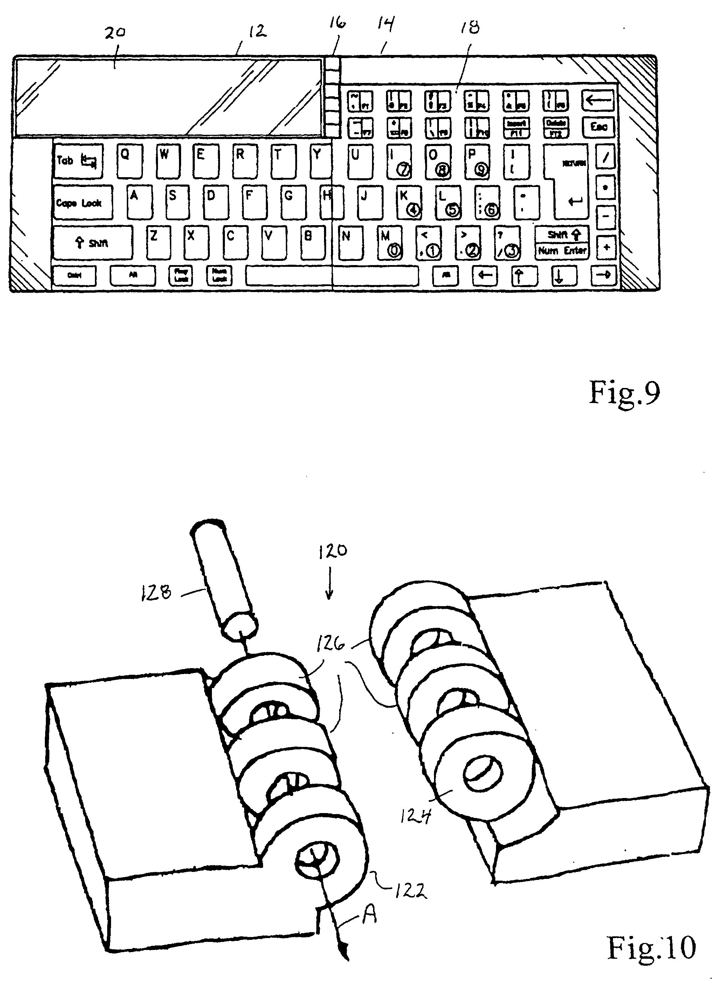

According to the invention, the computer 10 has a full-size QWERTY keyboard 18 in frame 15, with an array of keys 17. In the embodiment shown in Fig. 1 the computer has a width of approximately 4 1/4" or somewhat less and a folded length L of 6 1/8" or slightly less, so that it is able to fit comfortably in a shirt pocket, which is typically about 4 1/4" wide and 5" deep, with one end extending out of the pocket. As shown in Fig. 9, keys on a standard personal computer keyboard which are redundant for most applications, such as the numeric keypad, and function keys, are removed. A screen 20 is provided on top half 12. The necessary ports for a modem telephone connection, printer, power supply, computer connection, etc. can be provided along sides 23, 25 or rear edges 27, 29. Battery and CPU microprocessor may be located in compartments 24, 26. The bottom of top half 12 forms a flat surface 13, as does the bottom of bottom half 14. The keyboard 18 folds along fold line 11, which splits the "H" key 13 as shown in the Fig. 1, and the space bar 22. The split "H" keys 13 are located on each side of the fold line 11, and each half of the split key 13 is an effective key. The two sides of the split letter "H" will both be active so that the letter "H" will be typed whether the left side, right side or the two halves are struck together. Double typing of the letter can be avoided either by programming or the keys can be mechanically connected, such as by small male and female connectors, when the unit is in the fully open position. The split space bar 22 operates in the same way.

Keys 17 are very thin compared to standard keyboard keys and project preferably equal to or less than approximately 1/16" to 3/64" above the face of the keyboard 18. A key motion of only 1/32" to 3/64" is required. The entire folded computer 10, therefore, can be made extremely thin, i.e. 5/8" to 3/4 " thick in the folded position for the embodiment shown in Fig. 1, which will provide sufficient thickness in compartments 24, 26 for the microprocessor and modem. The hinges 16 (shown in more detail in Fig. 10) are located above and below the keyboard 18, carry the electrical connections and allow the two halves of the keyboard to align together precisely when in the open configuration shown in Fig. 1. Keys 17 have vertical sides and are 1/2" wide at the top and the bottom (in a standard keyboards the keys are tapered from 3/4" width at the base to 1/2" width at the top, finger-contacting surface).

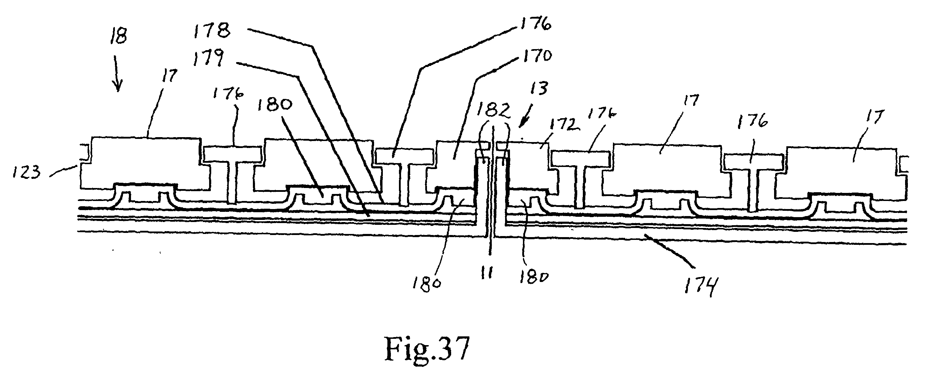

The split "H" key 13 is shown in cross-section in Fig. 37, consisting of separate keys 170, 172 on each side of the fold line 11. The keyboard 18 has a base 174, and a keyboard top 176 which retains the keys 17 through openings in which the keys protrude. As in existing electronic keyboards, a flexible matt 178 is provided under the top 176 on which keys 17 sit and which biases keys 17 upwardly so that the shoulders 123 of keys 17 are pressed against the underside of top 176 when not depressed by the user. A printed circuit board 179 is provided between base 174 and mat 178. An electrical contact 180 is provided on the underside of mat 178 under each key 17, so that when the key 17 is depressed, the appropriate electrical circuit is completed in circuit board 179 to signal to the microprocessor that the key has been depressed. Key halves 170, 172 function similarly and are guided in vertical movement by upstanding extensions 182 of base 174.

Hinge 16 comprises two halves 122, 124 (Fig. 10) each having three doughnut-shaped hinge elements 126 along opposing edges aligned co-axially and spaced at opposed locations so that the six hinge elements when interleaved lie along the same axis A. A hinge pin 128 is inserted through the central holes of the hinge elements 126 to hinge the two halves 122, 124 together. The centre of each hinge element 126 is located at the maximum height of the keys on keyboard 18, and also are aligned with the edge 19, 21 of halves 12, 14. In this way the tops of the keys 17 just touch together, but do not squeeze, when the halves 12, 14 are fully closed. Also the edges 19, 21 of the halves are flush when the computer is fully closed.

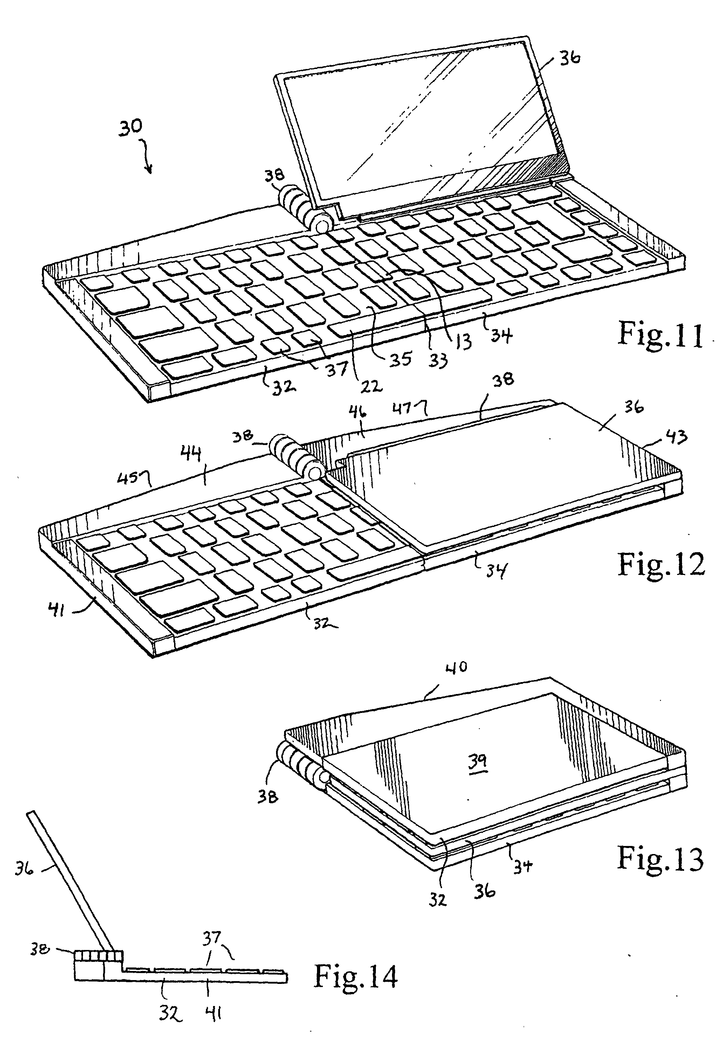

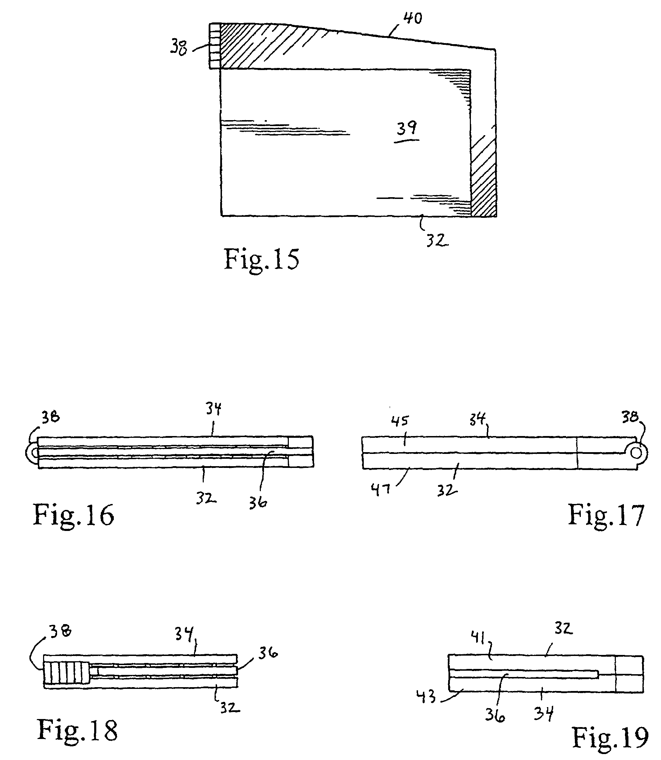

In the embodiment shown in Fig. 11, computer 30 has top half 32 and bottom half 34 which carry a standard QWERTY keyboard. A flip up screen 36 is provided on bottom half 32 which is pivotable along hinge 38 from a position flat against half 32, as shown in Fig. 12, to the raised position shown in Fig. 11. Keyboard keys 37 are arrayed on both top half 32 and bottom half 34. Again in this embodiment, the keyboard 35 folds along fold line 33, which splits the "H" key 13, and the space bar 22, which split keys operate as described above. The necessary ports for a modem telephone connection, printer, power supply, computer connection, etc. are provided along sides 41,43 or edges 45, 47. Battery and CPU microprocessor are located in compartment 44, 46. The bottom of top half 32 forms a flat surface 39, as does the bottom of bottom half 34. The profile of the embodiment shown in Fig. 11 is tapered to better fit in a shirt pocket. To this end the top edges 40 of halves 32, 34 are tapered as shown in Fig. 15.

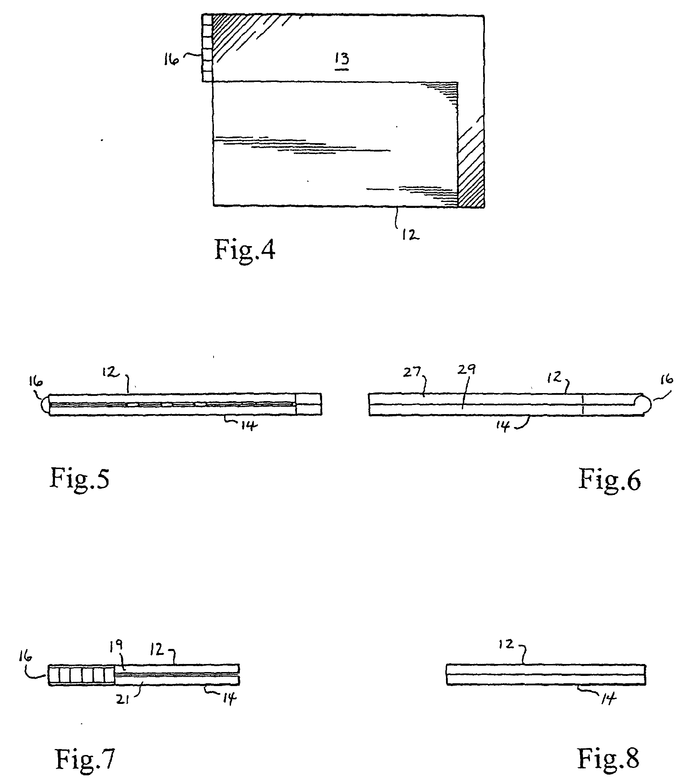

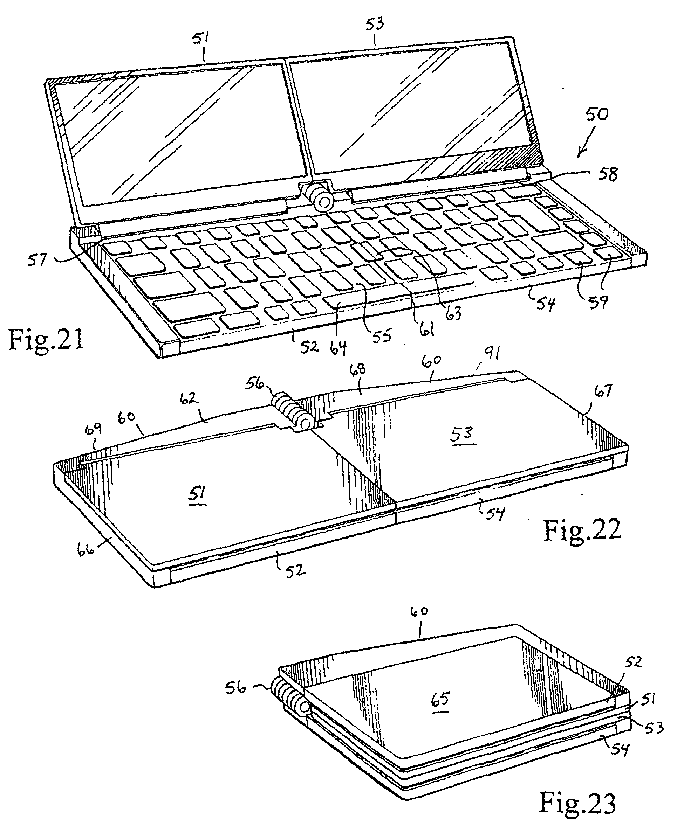

In the embodiment shown in Fig. 21, computer 50 has two flip-up screens 51, 53 provided on halves 52, 54 which are pivotable along hinges 57, 58 from a position flat against halves 52, 54 as shown in Fig. 22 to the raised position shown in Fig. 5. The embodiment shown in Fig. 21 can also be constructed with screens similar to that in Fig. 21 but with no center frame, but rather abutting screen edges, to improve the continuity of the screen. Keyboard 55 has keys 59 and folds along line 61 in conjunction with hinge 56, as in the Fig. 11 embodiment, with split "H" key 63 and split space bar 64. The necessary ports for a modem telephone connection, printer, power supply, computer connection, etc. are provided along the sides 66, 67 or edges 69, 91 as in the Fig. 11 embodiment. Battery and CPU microprocessor are located in compartments 62, 64. The bottom of top half 52 forms a flat surface 65, as does the bottom of bottom half 54. The profile of the embodiment shown in Fig. 21 is also tapered to better fit in a shirt pocket as in the embodiment as shown in Fig. 15. To this end the top edges 60 of halves 52, 54 are tapered as shown in Fig. 15.

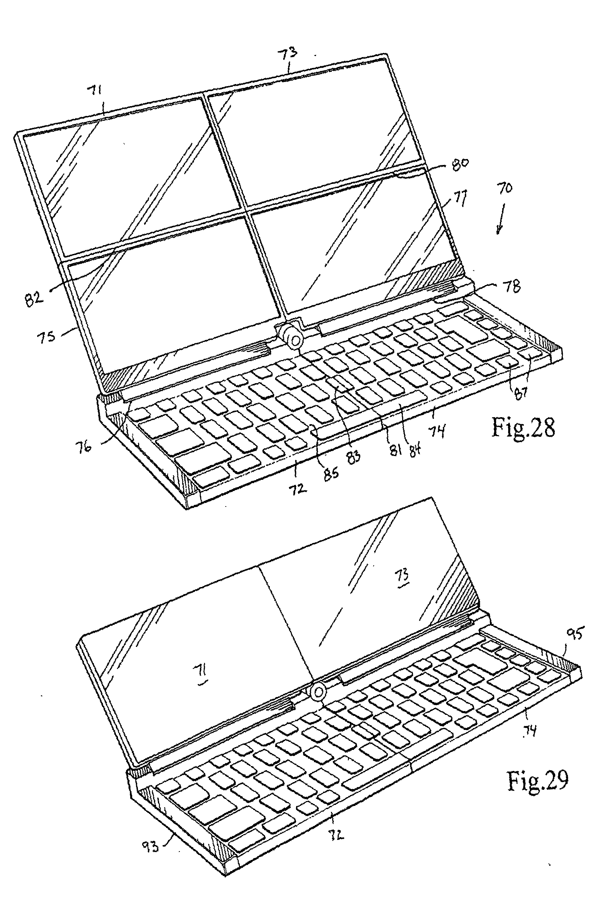

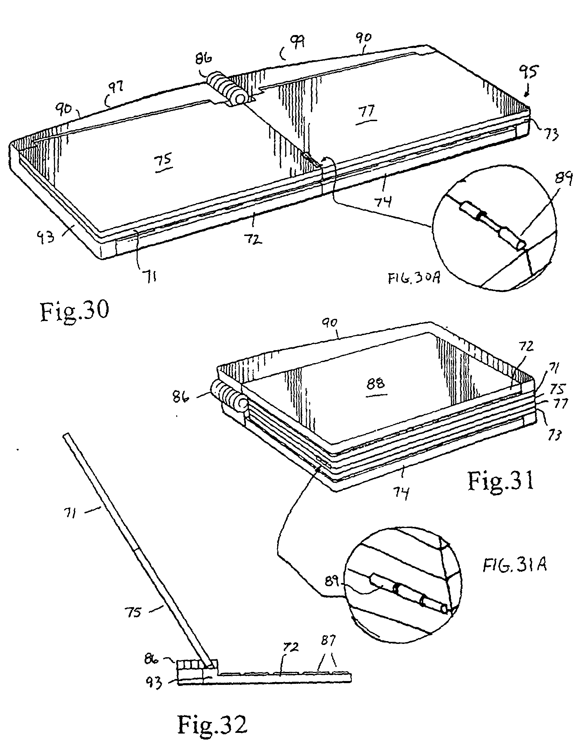

In the embodiment of the invention shown in Fig. 28, computer 70 has four flip up screens 71, 73, 75, 77 provided on halves 72, 74 which are pivotable along hinges 76, 78, 80, and 82, formed along the rear surface thereof by thin joints, from a position flat against halves 72, 74 as shown in Fig. 30, to the semi-raised position shown in Fig. 29, to the fully-raised position shown in Fig. 28. A small hinge 89 shown in detail in Fig. 30A and 31A, partially imbedded in the back of the screens, joins screens 75 and 77 for added strength. The embodiment shown in Fig. 28 can also be constructed with screens with no center frame, but rather abutting screen edges, to improve the continuity of the screen. Keyboard 85 has keys 87 and folds along line 81 in conjunction with hinge 86, as in the Fig. 11 embodiment, with split "H" key 83 and split space bar 84. In this embodiment a small hinge can be provided joining the two space bar sections 84 for added strength. The necessary ports for a modem telephone connection, printer, power supply, computer connection, etc. are provided along sides 93, 95 or edges 97, 99 as in the Fig. 11 embodiment. Compartments 94, 96 are provided to house the modem, batteries, CPU microprocessor and the like. The bottom of top half 72 forms a flat surface 88, as does the bottom of bottom half 74. The profile of the embodiment shown in Fig. 28 is also tapered to better fit in a shirt pocket as in the embodiment as shown in Fig. 15. To this end the top edges 90 of halves 72, 74 are tapered as shown in Fig. 15. The embodiment shown in Fig. 28 is particularly suitable for applications such as EXCEL™ which require four screen sections. Further, it can be constructed using software so that the lettering is justified on each of the screen sections, and positioning the horizontal joint between lines of text, so that the break between the four sections will not interfere with the legibility of the documents. The screens can be lit by light sources along the exterior frame.

In the embodiments of Fig. 11, 21 and 28, as in the Fig. 1 embodiment, the computer has a maximum width of approximately 4 1/4", and a folded length of approximately 6 -1/8". The tapered end of the computer has a minimum width of 3 7/8". It will be apparent to those skilled in the art that the thickness of the folded computer shown in Fig. 13, 23 and 31 is necessarily greater than the Fig. 2 embodiment due to the added thickness of the liquid crystal screen or screens, which are a liquid crystal film sandwiched between two pieces of structural glass or high impact plastic with a thickness of about 3/16" or less. Four such screens, as in the Fig. 28 embodiment, will total a thickness therefore of about 3/4" or less. The total folded thickness, for example, of the Fig. 11 embodiment is under 3/4" -- about 1/4" for each computer half 32, 34, plus 3/16" for the screen section, and the folded thickness of the Fig. 1 embodiment is under 1/2".

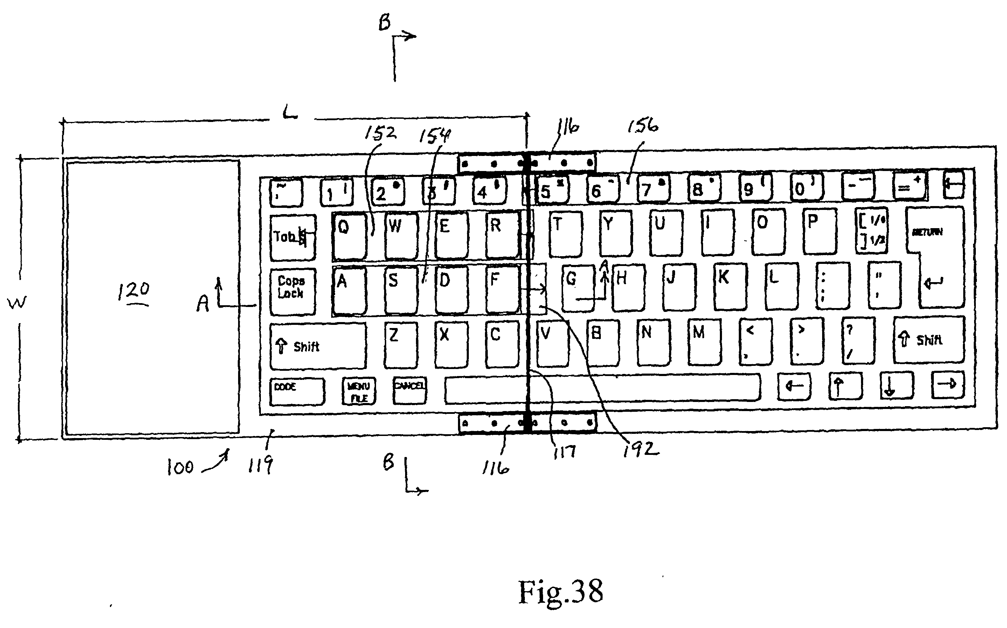

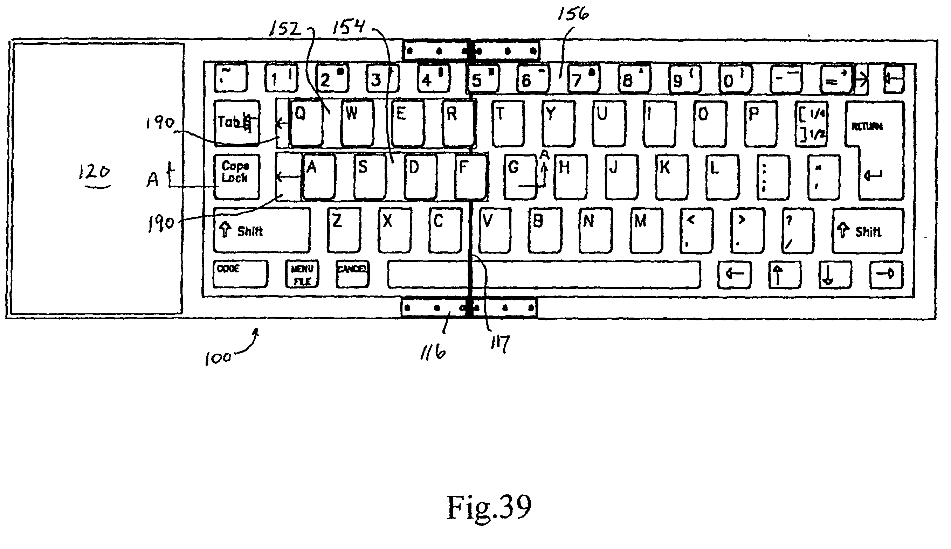

In a further embodiment illustrated in Fig. 38 through 42, the folding keyboard can be achieved by sliding certain keys rather than splitting keys to permit a folding keyboard. The groups of letters "QWER", "ASDF" and "567890-=" are movable on carriages 152, 154, 156 and slide from a folding position shown in Fig. 38 to a typing position shown in Fig. 39. In the typing position, the carriages 152, 154, 156 carrying the groups of letters will be locked into the normal keyboard locations. In order to re-fold the keyboard, the carriages 152, 154, 156 are moved to the position shown in Fig. 38 and locked in that position. The "Tab", "Caps Lock" and " " keys may be extendible to fill in the gaps created by the sliding into the "Typing Position". In the Fig. 38 embodiment, the computer 100 has body 119 and a screen 120 at one end of the keyboard, and hinges 116 on fold line 117.

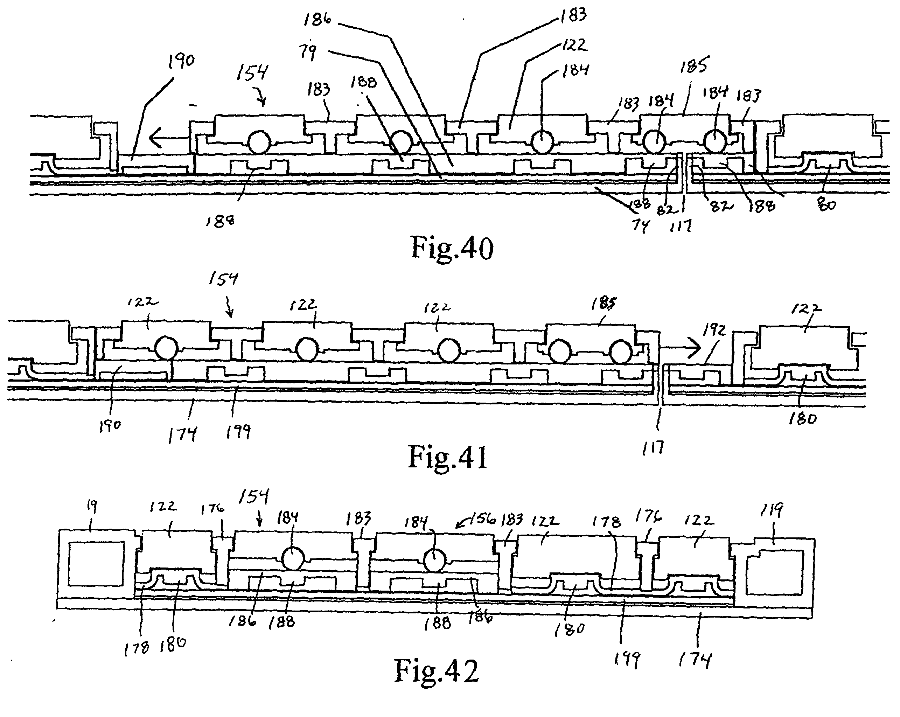

Carriage 154 is shown in cross-section in Fig. 40 and 41. Keys 122 are provided with a plastic roller 184, and are retained by plastic top 183. Flexible mat 186 is flat to permit rolling or sliding of carriage 154, and again carries on its underside electrical contacts 188 which form a circuit with circuit board 199 when keys 122, when in the typing position shown in Fig. 39, are depressed. Plastic infill pieces 190, 92 form a surface on which the carriage 54 can slide or roll. The "F" key 185 has two rollers 84 to contact separate electrical contacts 188. In Fig. 40 the carriage 154 is in typing position, whereas in Fig. 41 the carriage 154 has been moved to the folding position to permit folding along line 117.

Another alternative to achieving a folding keyboard without splitting keys, rather than using sliding keys, would be to leave the keys fixed in the position shown in fig. 39, leaving a jagged edge 17 along the fold line, which is less aesthetically pleasing but still operable to permit a folding keyboard.

## Claims

1. A folding computer keyboard. comprising a plurality of keys arranged in a plurality of rows extending in a lengthwise direction. said keys generally corresponding in spacing, size and location to the keys of a standard personal computer keyboard, and comprising two halves hingedly connected along a fold line extending generally perpendicularly to the direction of said rows of keys, wherein one of said keys is split into two portions, one on each side of said fold line to permit folding of said keyboard, whereby said split key is adapted to function by the striking of either portion independently or both portions together.

2. The folding computer keyboard of claim 1 wherein said split key portions are mechanically connected when said folding keyboard is unfolded and unconnected when said folding keyboard is folded.

3. The folding computer keyboard of claim 1 wherein said split key portions each are active.

4. The folding computer keyboard of claim I wherein said keys have a vertical travel distance equal to or less than 079 cm. (1/32").

5. The folding computer keyboard of claim 1 wherein said hinged connection is formed by each half having a plurality of hinge elements along opposing edges aligned co-axially and spaced at opposed locations so that said hinge elements when interleaved lie along the same axis, each hinge element having a central aperrure, and a hinge pin inserted through said central apertures of the hinge elements to secure the two halves, the centre of each hinge element being located at the maximum height of each keyboard half.

6. A folding pocket-sized computer, comprising the folding computer keyboard of claim 1, a screen comprising a screen section pivotally connected to one of said keyboard halves, and a central processing unit, data storage and input means associated with said folding keyboard.

7. The folding pocket-sized computer of claim 6 wherein said split key portions each are active and said computer is programmed to avoid double typing by said split key portions.

8. The folding pocket-sized computer of claim 6 wherein said split key portions are mechanically connected when said folding keyboard is unfolded and unconnected when said folding keyboard is folded.

9. The folding pocket-sized computer of claim 6, wherein said screen comprises two screen sections, each pivotally connected to one of said keyboard halves.

10. The folding pocket-sized computer of claim 6, wherein said screen comprises four screen sections, a first and a second screen section each pivotally connected to one of said keyboard halves and a third and a fourth screen section each pivotally connected to one of said first and second screen sections.

11. The folding pocket-sized computer of claim 6 having dimensions when folded less than 10.2 cm. (4") x 17.8 cm. (7").

12. The folding pocket-sized computer of claim 6 wherein the number of functions of the computer is minimized so as to create a unit which will function exclusively as an Internet Access Device.

13. The folding computer of claim 6 wherein said hinged connection is formed by each keyboard halt having hinge elements along opposing edges aligned co-axially and spaced at opposed locations adjacent one lengthwise edge only of said keyboard so that said hinge elements when interleaved lie along the same axis spaced from said rows of keys.

14. The folding computer of claim 13 wherein each said hinge element has a central aperture, and a hinge pin is inserted through said central apertures of the hinge elements to secure the two halves, the centre of each hinge element being located at the maximum height of each keyboard half.

## Patentansprüche

1. Zusammenklappbare Tastatur für einen Computer mit einer Anzahl von Tasten, die in einer Anzahl von Reihen angeordnet sind, die sich in einer Längsrichtung erstrecken, wobei die Tasten bezüglich Abstand, Größe und Anordnung den Tasten einer standardisierten Tastatur eines Personal-Computers entsprechen, und mit zwei Hälften, die entlang einer Faltlinie gelenkig miteinander verbunden sind, welche sich im Wesentlichen rechtwinklig zu der Richtung der Reihen von Tasten erstreckt, wobei eine der Tasten in zwei Abschnitte geteilt ist, die sich jeweils auf einer Seite der Faltlinie befinden und so gestatten, die Tastatur zu falten, wodurch die geteilte Taste so angepasst ist, dass sie durch Drücken eines der beiden Bereiche unabhängig vom anderen oder beider Bereiche zusammen funktioniert.

2. Klappbare Tastatur für einen Computer gemäß Anspruch 1, wobei die Bereiche der geteilten Taste mechanisch verbunden sind, wenn die klappbare Tastatur aufgeklappt ist, und nicht miteinander verbunden sind, wenn die klappbare Tastatur zusammengeklappt ist.

3. Klappbare Tastatur für einen Computer gemäß Anspruch 1, wobei die Bereiche der geteilten Taste jeweils aktiv sind.

4. Klappbare Tastatur für einen Computer gemäß Anspruch 1, wobei die Tasten einen vartikalen Hub haben, der kleiner oder gleich 0,073 cm (1/32") ist.

5. Klappbare Tastatur für einen Computer gemäß Anspruch 1, wobei die gelenkige Verbindung von jeder Hälfte ausgebildet ist mit einer Anzahl von Gelenkelementen entlang einander gegenüberliegender Kanten, die koaxial und aneinander gegenüberliegenden Stellen so ausgerichtet sind, dass die Gelenkelemente ineinandergreifend entlang derselben Achse liegen, wobei jedes Gelenkelement eine zentrale Öffnung aufweist, sowie einen Gelenkzapfen, der durch die zentralen Öffnungen des Gelenkelementes eingesetzt ist und so die zwei Hälften miteinander verbindet, wobei die Mitte jedes Gelenkelementes an der Stelle der größten Höhe der beiden Hälften der Tastatur angeordnet ist.

6. Klappbarer Computer im Taschenformat mit der klappbaren Tastatur für einen Computer gemäß Anspruch 1, einen Bildschirm mit einem Bildschirmabschnitt, der schwenkbar an einer der Hälften der Tastatur angebracht ist, und einer zentralen Verarbeitungseinheit, Datenspeicher und Eingabemitteln, die mit der klappbaren Tastatur verbunden sind.

7. Klappbarer Computer im Taschenformat gemäß Anspruch 6, wobei die Bereiche der geteilten Taste jeweils aktiv sind und der Computer so programmiert ist, dass ein doppeltes Anschlagen mittels der Bereiche der geteilten Taste vermieden ist.

8. Klappbarer Computer im Taschenformat gemäß Anspruch 6, wobei die Bereiche der geteilten Taste mechanisch verbunden sind, wenn die klappbare Tastatur aufgeklappt ist, und nicht miteinander verbunden sind, wenn die klappbare Tastatur zusammengeklappt ist.

9. Klappbarer Computer im Taschenformat gemäß Anspruch 6, wobei der Bildschirm zwei Bildschirmbereiche aufweist, die jeweils schwenkbar an einer Hälfte der Tastatur angebracht sind.

10. Klappbarer Computer im Taschenformat gemäß Anspruch 6, wobei der Bildschirm vier Bildschirmabschnitte aufweist, von denen ein erster und ein zweiter Abschnitt des Bildschirms jeweils schwenkbar mit einer der Hälften der Tastatur verbunden sind, und ein dritter und ein vierter Abschnitt des Bildschirms jeweils schwenkbar mit einem der ersten und zweiten Abschnitte des Bildschirms.

11. Klappbarer Computer im Taschenformat gemäß Anspruch 6 mit Abmessungen kleiner als 10,2 cm (4") x 17,8 cm (7") im zusammengefalteten Zustand.

12. Klappbarer Computer im Taschenformat gemäß Anspruch 6, wobei die Anzal der Funktionen des Computers minimiert ist, um so eine Vorrichtungseinheit zu schaffen, die ausschließlich als Vorrichtung zum Zugang ins Internet dient.

13. Klappbarer Computer gemäß Anspruch 6, wobei die gelenkige Verbindung von jeder Hälfte der Tastatur mit Gelenkelementen entlang einander gegenüberliegender Kanten gebildet ist, die kooxial und voneinander beabstandet an einander gegenüberliegenden Orten ausgerichtet sind im Bereich einer Längskante der Tastatur, so dass die Gelenkelemente im gegenseitigen Eingriff entlang der selben Achse in einem Abstand von der Reihe von Tasten liegen.

14. Klappbarer Computer nach Anspruch 13, wobei jedes Gelenkelement eine zentrale Öffnung aufweist und wobei ein Gelenkzapfen durch die zentralen Öffnungen der Gelenkelemente durchgesteckt ist und so die Hälften miteinander verbindet, wobei die Mitte jedes Gelenkelementes in der größten Höhe jeder Hälfte der Tastatur angeordnet ist.

## Revendications

1. Clavier d'ordinateur pliant, comprenant une pluralité de touches disposées selon plusieurs rangées dans le sens de la longueur, lesdites touches correspondant pour la plupart en espacement, en taille et en emplacement aux touches d'un clavier d'ordinateur personnel standard, et comprenant deux moitiés reliées par des charnières le long d'une ligne de pliage s'étendant généralement perpendiculairement au sens desdites rangées de touches, dans lequel une desdites touches est divisée en deux parties, chacune de chaque côté de ladite ligne de pliage pour permettre de plier ledit clavier, de façon que ladite touche en deux parties puisse fonctionner lors de l'enfoncement de l'une ou l'autre des parties indépendamment ou des deux parties simultanément.

2. Clavier d'ordinateur pliant selon la revendication 1, dans lequel lesdites parties de la touche en deux parties sont reliées de façon mécanique quand ledit clavier pliant est déplié et dissociées quand ledit clavier pliant est plié.

3. Clavier d'ordinateur pliant selon la revendication 1, dans lequel lesdites parties de la touche en deux parties sont toutes deux actives.

4. Clavier d'ordinateur pliant selon la revendication 1, dans lequel lesdites touches sont séparées par une distance verticale inférieure ou égale à 0,079 cm (1/32 ").

5. Clavier d'ordinateur pliant selon la revendication 1, dans lequel ladite liaison par charnière est formée par la présence sur chacune des moitiés de plusieurs éléments charnière disposés le long de leurs bords opposés, alignés sur le même axe et placés en opposition de façon que lesdits éléments charnière, quand ils sont emboîtés, se trouvent le long du même axe, chaque élément charnière possédant une ouverture centrale, et un gond, introduit à travers lesdites ouvertures centrales des éléments charnière pour fixer les deux moitiés, le centre de chaque élément charnière étant situé à la hauteur maximale de chaque moitié de clavier.

6. Ordinateur de poche pliant, comprenant le clavier d'ordinateur pliant selon la revendication 1, un écran comprenant une partie d'écran reliée par pivot à l'une desdites moitiés de clavier, et une unité centrale, des moyens de saisie et de stockage de données associés audit clavier pliant.

7. Ordinateur de poche pliant selon la revendication 6, dans lequel lesdites parties de la touche en deux parties sont toutes deux actives et ledit ordinateur est programmé pour éviter la répétition lors de la frappe desdites parties de la touche en deux parties.

8. Ordinateur de poche pliant selon la revendication 6, dans lequel lesdites parties de la touche en deux parties sont reliées de façon mécanique quand ledit clavier pliant est déplié et dissociées quand ledit clavier pliant est plié.

9. Ordinateur de poche pliant selon la revendication 6, dans lequel ledit écran comprend deux parties d'écran, chacune reliée par pivot à l'une desdites moitiés de clavier.

10. Ordinateur de poche pliant selon la revendication 6, dans lequel ledit écran comprend quatre parties d'écran, une première et une deuxième parties d'écran reliées chacune par pivot à l'une desdites moitiés de clavier et une troisième et une quatrième parties d'écran reliées chacune par pivot à l'une desdites première et deuxième parties d'écran.

11. Ordinateur de poche pliant selon la revendication 6 présentant, lorsqu'il est plié, des dimensions inférieures à 10,2 cm (4 ") par 17,8 cm (7 ").

12. Ordinateur de poche pliant selon la revendication 6, dans lequel le nombre de fonctions de l'ordinateur est minimisé de façon à créer une unité qui fonctionnera exclusivement en tant que dispositif d'accès à Internet.

13. Ordinateur de poche pliant selon la revendication 6, dans lequel ladite liaison par charnière est formée par la présence sur chacune des moitiés du clavier d'éléments charnière situés le long de leurs bords opposés, alignés sur le même axe et placés en opposition le long d'un bord sur la longueur uniquement dudit clavier de façon que lesdits éléments charnière, quand ils sont emboîtés, se trouvent le long du même axe, espacés desdites rangées de touches.

14. Ordinateur de poche pliant selon la revendication 13, dans lequel chaque élément charnière possède une ouverture centrale, et un gond est introduit à travers lesdites ouvertures centrales des éléments charnière pour fixer les deux moitiés, le centre de chaque élément charnière étant situé à la hauteur maximale de chaque moitié de clavier.
